# EUROPEAN PATENT APPLICATION

(11) **EP 0 657 882 A2**
(43) Date of publication of application: **14.06.1995**
(21) Application number: 94308799.9
(22) Date of filing: 29.11.1994
(51) Int. Cl.: G11B 17/04, G11B 23/03

(54) **Disc cartridge apparatus**

(30) Priority: 30.11.1993 JP 300345/93
(71) Applicant: KABUSHIKI KAISHA TOSHIBA, Kawasaki-shi, Kanagawa-ken 210 (JP)
(72) Inventor: Imaoka, Yoshiharu, c/o Intellectual Property Div., Tokyo (JP); Tomita, Seiji, c/o Intellectual Property Div., Tokyo (JP); Kurafuji, Takamasa, c/o Intellectual Property Div., Tokyo (JP)
(74) Representative: O'Connell, David Christopher

(57) **Abstract**

A disc cartridge apparatus includes a cartridge main body wherein a disc having an information bearing surface is rotatably accommodated and which is provided with an opening confronted by an optical pickup for recording or reproducing of an information signal to or from the disc, a sliding shutter installed in the cartridge main body in capable of sliding between a position where it covers the opening of the cartridge main body and another position where it uncovers the opening, a releasable locking mechanism having a portion to be engaged defined on the sliding shutter and an engaging portion defined on the cartridge main body for locating the sliding shutter to the position covering the opening, a shutter drive member for sliding the sliding shutter in the uncovering position by releasing the lock of the locking mechanism as well as sliding the sliding shutter from the uncovering position to the covering position, and a guide member formed in the cartridge main body for guiding the shutter drive member in the operation of sliding the sliding shutter to the covering position in engage with the shutter drive member, the locking mechanism and the guide groove are defined to be closed by the sliding shutter in the covering position.

## Description

The present invention generally relates to a disc cartridge apparatus and more particularly, to a disc cartridge apparatus which rotatably accommodates a circular disc such as an optical recording disc, a magneto-optic recording disc and a magnetic disc, having a sliding shutter capable of covering and uncovering an opening defined for recording or reproducing signals therethrough to or from the disc, and more particularly, to such a disc cartridge apparatus wherein the sliding shutter is installed in the cartridge in capable of sliding between a position where it covers the opening and another position spaced in one direction and another direction from the covering position, where it uncovers the opening.

Conventionally a disc cartridge rotatably accommodates a circular disc such as an optical recording disc, a magneto-optic recording disc and a magnetic disc in a cartridge main body comprising an upper and a lower case-halves which are butt-joined with each other. In the cartridge main body accommodating the circular disc as mentioned above, an opening confronting an optical pickup for recording or reproducing of an information signal to or from a disc is defined in the main body in extending in the radial direction from nearly the center of the disc. The opening also confronts a disc turntable of a disc driving apparatus for rotating the disc with the optical pickup. Further on the cartridge main body, a shutter formed by a thin metal plate or an engineering plastics for opening and closing the opening, is installed in capable of sliding.

Now, the sliding shutter installed therein is so arranged that the sliding shutter will be located on a position where the opening is covered for protection the disc when the cartridge main body is not loaded into an information recording reproducing apparatus containing the disc driving apparatus. For the object, a spring which gives the sliding shutter a bias force in the direction toward the covering position is provided in the cartridge main body. Further in a cartridge wherein a sliding shutter is arranged to slide in both directions from a central position where it covers the opening to uncover the opening, the cartridge is further provided with a locking mechanism for preventing the sliding motion of the sliding shutter at the covering position. Further when the cartridge is loaded into an information recording reproducing apparatus, the opening must be uncovered by easily and accurately sliding the sliding shutter. Thus a shutter drive mechanism is required such two opposite functions.

Though the cartridge must be reduced its thickness, a conventional cartridge had a drawback that a mechanism becomes complicated for satisfying such requirements as well as necessitates a plurality of components.

As described above, the conventional disc cartridge apparatus has a drawback that it is sophisticated in its construction and necessitates a plurality of components as well as it is suffered with a cost problem.

It is, therefore, an object of the present invention to provide a disc cartridge apparatus which is able to remove the drawbacks in the conventional apparatus.

Another object of the present invention is to provide a disc cartridge which is constructed by a relatively small parts count and is able to accurately perform a shutter drive operation.

In order to achieve the above object, a disc cartridge apparatus according to one (1st) aspect of the present invention includes:
a cartridge main body wherein a disc having an information bearing surface is rotatably accommodated, and which is provided with an opening confronted by a pickup for recording or reproducing of an information signal to or from the disc;
a sliding shutter installed in the cartridge main body in capable of sliding between a position where it covers the opening of the cartridge main body and another position where it uncovers the opening;
a releasable locking mechanism having a portion to be engaged defined on the sliding shutter and an engaging portion defined on the cartridge main body for locating the sliding shutter to the position covering the opening;
a shutter drive member for sliding the sliding shutter in the uncovering position by releasing the lock of the locking mechanism as well as sliding the sliding shutter from the uncovering position to the covering position; and
a guide member formed in the cartridge main body for guiding the shutter drive member in an operation of sliding the sliding shutter to the covering position in engage with the shutter drive member, the locking mechanism and the guide groove are defined to be closed by the sliding shutter in the covering position.

A disc cartridge apparatus according to another (2nd) aspect of the present invention includes:
a cartridge main body wherein a disc having an information bearing surface is rotatably accommodated, and which is provided with an opening confronted by a pickup for recording or reproducing of an information signal to or from the disc;
a sliding shutter installed the cartridge main body in capable of sliding between a position where it covers the opening of the cartridge main body and another position spaced in one direction and another direction from the covering position, where it uncovers the opening;
a locking mechanism having a first and second portion to be engaged defined on the sliding shutter, a first engaging portion for preventing the slide of the sliding shutter in the first direction in engaged with the first portion to be engaged and a second engaging portion for prevention the slide of the sliding shutter in the second direction in engaged with the second portion to be engaged;
a shutter drive member for driving the sliding shutter in the uncovering position by disengaging the portion to be engaged and the engaging portion of the locking mechanism as well as driving the sliding shutter from the uncovering portion to the covering position; and
a guide member having a guide groove formed to be located between the first and the second engaging portion in the cartridge main body for guiding the shutter drive member in the operation of sliding the sliding shutter to the covering position in engage with the shutter drive member.

A disc cartridge apparatus according to still another (3rd) aspect of the present invention includes:
a cartridge main body wherein a disc having an information bearing surface is rotatably accommodated, and which is provided with an opening confronted by a pickup for recording or reproducing of an information signal to or from the disc;
a sliding shutter having a shutter blade installed in the cartridge main body in capable of sliding between a position where it covers the opening of the cartridge main body and another position where it uncovers the opening;
a locking mechanism having a portion to be engaged defined on the sliding shutter and an engaging portion defined on the cartridge main body for locating the sliding shutter to the position covering the opening;
a shutter drive passage groove defined on the cartridge main body;
a shutter drive member which is inserted through the shutter drive passage groove for driving the sliding shutter in the uncovering position by releasing the lock of the locking mechanism as well as driving the sliding shutter form the uncovering position to the covering position when the sliding shutter is in the position covering the opening; and
a slip-out preventing member having a hook engaged in capable of sliding with the cartridge main body formed to be located on the both sides of the sliding shutter when the sliding shutter covers the opening.

A disc cartridge apparatus according to still another (4th) aspect of the present invention includes:
a main body of a cartridge apparatus which accommodates a disc having a signal bearing surface rotatably and is provided with an opening confronted by a pickup for performing the recording or the reproduction of information signals to or from the accommodated disc;
a sliding shutter mounted to the main body of the cartridge apparatus in capable of sliding between a position where the opening of the main body of the cartridge apparatus is to be closed and a position where the opening is to be opened in both of one direction and an opposite direction;
a locking mechanism which includes a portion to be engaged provided on the sliding shutter and an engaging portion provided on the main body of the cartridge apparatus and locates the sliding shutter at the close position when it is at a position where the opening is to be closed;
a shutter opening and closing member which unlocks the locking mechanism as its tip bumps against the engaging portion of the locking mechanism, slides the sliding shutter to the opened position and slides the sliding shutter located at the opened position to the closed position;
a shutter opening and closing passage formed on the main body of the cartridge apparatus for guiding the sliding shutter opening and closing member to the locking mechanism; and
a guide member which is provided with a guide groove formed on the main body of the cartridge apparatus extending to the sliding shutter opening and closing passage and guides the sliding shutter to position at the close position when the sliding shutter opening and closing member slides the sliding shutter to perform the sliding shutter open/close operation, and at least a part of its wall surface is formed by the engaging portion of the locking mechanism.

A disc cartridge apparatus according to still another (5th) aspect of the present invention includes:
a cartridge main body wherein a disc having an information bearing surface is rotatably accommodated, and which is provided with an opening confronted by a pickup for recording or reproducing of an information signal to or form the disc;
a sliding shutter having a shutter blade installed in the cartridge main body in capable of sliding between a position where it covers the opening of the cartridge main body and another position where it uncovers the opening;
a locking mechanism having a portion to be engaged defined on the gliding shutter and an engaging portion defined on the cartridge main body for locating the sliding shutter to the position covering the opening;
a shutter drive member which tip bumps against the engaging portion of the locking mechanism for sliding the sliding shutter by releasing the lock of the locking mechanism as well as sliding the sliding shutter form the uncovering position to the covering position; and
a sliding shutter drive member blocking member defined on the cartridge main body for preventing the slide of the sliding shutter located in a wrong position when the cartridge main body bumps against the tip of the shutter drive member.

A disc cartridge apparatus according to still another (6th) aspect of the present invention includes:
a cartridge main body wherein a dies having an information bearing surface is rotatably accommodated ,and which is provided with an opening confronted by a pickup for recording or reproducing of an information signal to or from the disc;
a sliding shutter installed in the cartridge main body in capable of sliding between a position where it covers the opening of the cartridge main body and another position where it uncovers the opening;
a locking mechanism having a portion to be engaged defined on the sliding shutter and an engaging portion defined on the cartridge main body for locating the sliding shutter to the position covering the opening;
a shutter drive member which tip bumps against the engaging portion of the locking mechanism for sliding the sliding shutter by releasing the lock of the locking mechanism as well as sliding the sliding shutter from the uncovering position to the covering position; and
a sliding shutter drive member blocking member defined on the cartridge main body for preventing the slide of the sliding shutter located in a wrong position when the cartridge main body bumps against the tip of the shutter drive member.

A disc cartridge apparatus according to still another (7th) aspect of the present invention is characterized by that, in the 1st, 3rd, 4th, 5th or 6th aspect of the disc cartridge apparatus, the lock mechanism includes:
first and second engaged portions defined on the sliding shutter;
a first engaging portion defined on the cartridge main body for preventing the slide of the sliding shutter in one direction by engaged with the first portion to be engaged, when the sliding shutter is located at a position covering the opening; and
a second engaging portion defined on the cartridge main body for preventing the slide of the sliding shutter in the other direction by engaged with the second portion to be engaged, also when the sliding shutter is located at the position covering the opening.

A disc cartridge apparatus according to still another (8th) aspect of the present invention is characterized by that, in the 3rd, 4th, 5th or 6th aspect of the disc cartridge apparatus, the tip of the shutter drive member includes a pin with steps, and wherein portions to be engaged to the sliding shutter corresponding to it is shaped into a stepped shape slit.

A disc cartridge apparatus according to still another (9th) aspect of the present invention is characterized by that, in the 3rd, 4th, 5th or 6th aspect of the disc cartridge apparatus, the tip of the shutter drive member includes a pin with steps, and wherein a web-like rib engaging with the pin with steps is defined on the engaging portion of the locking mechanism.

A disc cartridge apparatus according to still another (10th) aspect of the present invention is characterized by that, in the 3rd, 4th, 5th or 6th aspect of the disc cartridge apparatus, the tip of the shutter drive member includes a pin with steps, and the portion to be engaged of the sliding shutter corresponding to it includes a slit, and the entering position of the pin of the shutter drive member in entering the slot of the sliding shutter decenters in opposite direction to the sliding shutter open direction.

A disc cartridge apparatus according to still another (11th) aspect of the present invention includes:
a cartridge main body is constructed by fitting the upper and lower case-halves with each other wherein a disc having an information bearing surface is rotatably accommodated, and which is provided with an opening confronted by a pickup for recording or reproducing of an information signal to or from the disc;
a sliding shutter installed in the cartridge main body in capable of sliding between a position where it covers the opening of the cartridge main body and another position where it uncovers the opening; and
a groove which defined on the cartridge main body side formed on the one of the case-half of the cartridge main body and, a plane surface containing the one side of the groove is a half fitting surface.

In still another (12th) aspect of the present invention, a disc cartridge apparatus includes:
a main body of a cartridge apparatus which accommodates a disc having a signal bearing surface rotatably and is provided with an opening confronted by a pickup for performing the recording or reproduction of information signals to or from the accommodated disc;
a sliding shutter mounted to the main body of the cartridge apparatus in capable of sliding between a position where the opening of the main body of the cartridge apparatus is to be closed and a position where the opening is to be opened in both one direction and an opposite direction;
a locking mechanism including a first and a second portions to be engaged provided on the sliding shutter, a first engaging portion that is elastic and prevents the sliding shutter from sliding in one direction when the sliding shutter is located at the position where the opening is closed as engaged with the first portion to be engaged provided on the main body of the cartridge apparatus, and a second engaging portion that is elastic and prevents the sliding shutter from sliding in the other direction as engaged with the second portion to be engaged. This locking mechanism has been so formed that the first and the second engaging portions have engaging end surfaces to engage with the sliding shutter in the state where they are kept engaged with the engaging holes, respectively and the engaging end surfaces face in the opposite directions each other.

In still another (13th) aspect of the present invention, a disc cartridge apparatus includes:
a main body of a cartridge apparatus which accommodates a disc having a signal bearing surface rotatably and is provided with an opening confronted by a pickup for performing the recording or reproduction of information signals to or from the accommodated disc;
a sliding shutter mounted to the main body of the cartridge apparatus, which has a surface opposite to the end surface of the main body of the cartridge apparatus and a surface extending from this surface and is opposite to the plane of the main body of the cartridge apparatus, and is slidable between a position where the opening of the main body of the cartridge apparatus is to be closed and a position where the opening is to be opened;
a releasable locking mechanism which locates and locks the sliding shutter at the close position when the sliding shutter is at a position where the opening is to be closed; and
a pair of engaging slits provided to the sliding shutter to allow the sliding shutter opening and closing member enter to unlock the locking mechanism in the state where the sliding shutter is at the closed position and provided at the symmetrical positions against a point that becomes the substantial center of the directions of width and thickness of the end surface of the main body of the cartridge apparatus when the sliding shutter is at the closed position.

In still another (14th) aspect of the present invention, a disc cartridge apparatus includes:
a main body of a cartridge apparatus which accommodates a disc having a signal bearing surface rotatably and is provided with an opening confronted by a pickup for both sides of the accommodated disc for performing the recording or reproduction of information signals to or from the accommodated disc;
a sliding shutter which has an extension piece opposing to the end surface of the main body of the cartridge apparatus and a pair of shutter blades provided opposing to both side ends of this extension piece and is mounted to the main body of the cartridge apparatus in capable of sliding between a position where each opening of the main body of the cartridge apparatus is to be closed and a position where the opening is to be opened;
a releasable locking mechanism for locating the sliding shutter at a close position when the opening is at the close position; and
a pair of engaging slits provided to the sliding shutter to allow the sliding shutter opening and closing member enter to unlock the locking mechanism in the state where the sliding shutter is at the closed position and provided at the symmetrical positions against a point that becomes a substantial center of the directions of width and thickness of the end surface of the main body of the cartridge apparatus when the sliding shutter is at the closed position.

A disc cartridge apparatus according to still another (15th) aspect of the present invention is characterized by that, in the 13th or 14th aspect of the disc cartridge apparatus, the sliding shutter is mounted to the main body of the cartridge apparatus slidable between a position where the opening of the main body of the cartridge apparatus is to be closed and a position where the opening is to be opened in both of one direction and an opposite direction; and
a locking mechanism including a first and a second portions to be engaged provided on the sliding shutter, a first engaging portion that blocks the sliding shutter from sliding in one direction when the sliding shutter is located at the position where the opening is closed as engaged with the first portion to be engaged provided on the main body of the cartridge apparatus, and a second engaging portion that is elastic and prevents the sliding shutter from sliding in the other direction as engaged with the second portion to be engaged.

In still another (16th) aspect of the present invention, a disc cartridge apparatus includes:
a main body of a cartridge apparatus which accommodates a disc having a signal bearing surface and a clamp portion at its center rotatably and is provided with an opening confronted by a pickup for performing the recording or reproduction of information signals to or from the accommodated disc:
a sliding shutter which is mounted to the main body of the cartridge apparatus in capable of sliding between positions where the opening of the main body of the cartridge apparatus is to be closed and opened and is formed to conceal a part of the opening by at least a part of the edge of the sliding shutter when the sliding shutter is located at the position where the opening is to be opened, and
a releasable locking mechanism which includes a portion to be engaged provided on the sliding shutter and an engaging portion-provided on the main body of the cartridge apparatus and locates the sliding shutter at a closed position when the sliding shutter is at the position where the opening is closed.

In still another (17th) aspect of the present invention, a disc cartridge apparatus includes:
a main body of a cartridge apparatus which accommodates a disc having a signal bearing surface and a clamp portion provided at its center rotatably and is provided with an opening confronted by a pickup for performing the recording or reproduction of information signals to or from the accommodated disc and an opening confronted by a driving gear for driving a disc;
a sliding shutter mounted to the main body of the cartridge apparatus in capable of sliding between positions where the opening of the main body of the cartridge apparatus is to be closed and opened and is so formed that at least a part of the edge of the sliding shutter corresponding to the opening for driving a disc is cut in the same shape as a part of the disc driving opening and at least the disc driving opening is almost fully opened when the sliding shutter is at a position where the opening is to be opened; and
a releasable locking mechanism comprising portions to be engaged provided to the sliding shutter and engaging portions provided to the main body of the cartridge apparatus for locating the sliding shutter at the closed position when the sliding shutter is at a position where the opening is closed.

A disc cartridge apparatus according to still another (18th) aspect of the present invention is characterized by that, in the 17th aspect of the disc cartridge apparatus, the sliding shutter is mounted to the main body of the cartridge apparatus in capable of sliding between a position where the opening of the main body of the cartridge apparatus is to be closed and a position where the opening is to be opened in both one direction and an opposite direction and a part of each edge of the openings corresponding to the driving opening of the sliding shutter is cut in the same shape as a part of the driving opening so that the driving opening is almost fully opened when the sliding shutter is at the positions where the openings are to be opened.

A disc cartridge apparatus according to still another (19th) aspect of the present invention is characterized by that, in the 1st aspect of the disc cartridge apparatus, the main body of the cartridge apparatus includes a first half and a second half which are arranged facing each other and these first and second halves are assembled by engaging an engaging hook formed on one of the halves with the engaging slit formed on the other half.

A disc cartridge apparatus according to still another (20th) aspect of the present invention is characterized by that, in the 2nd, 7th, 12th of 15th aspect of the disc cartridge apparatus, an engaging stopper which bumps against a part of the main body of the cartridge apparatus in order to define the displacement is formed on the tips of the first and the second engaging portions, respectively.

In still another (21st) aspect of the present invention, a disc cartridge apparatus includes:
a main body of a cartridge apparatus which includes a first and a second halves arranged facing each other, accommodates a disc having a signal bearing surface rotatably and is provided with an opening confronted by a pickup for performing the recording or the reproduction of information signals to or from the accommodated disc;
a sliding shutter mounted to the main body of the cartridge apparatus in capable of sliding between a position where the opening of the main body of the cartridge apparatus is to be closed and a position where the opening is to be opened;
a bank provided to the first half of the main body of the cartridge apparatus to connect the end of the opening and a first bridge provided to the first half with a specific space to the bank to connect the opening to the first half;
a second bridge provided to the second half of the main body of the cartridge apparatus so that it is laid over the first bridge in the direction of width and an elastic engaging portion provided to the second half of the main body of the cartridge apparatus so that the tip is positioned between the bank of the first half;
a releasable locking mechanism which includes a portion to he engaged provided to the sliding shutter and the engaging portion of the main body of the cartridge apparatus and locates the sliding shutter at the close position when the sliding shutter is at the closed position of the opening.

According to the disc cartridge apparatus in the aspect as claimed in claim 1, the locking mechanism and the guide groove for sliding the sliding shutter engaged with the tip of the shutter drive operation are defined on the position covered by the sliding shutter in covering position. So, the outlook of the disc cartridge apparatus can be beautified. Also, since the guide groove is not exposed in normal covering position (during the time that the disc cartridge is not applied), there not occurs that the dust enter through it, disc surface is damaged, or it is impossible to drive the sliding shutter by child's mischief.

According to the disc cartridge apparatus in the aspect as claimed in claim 2, since the locking mechanism is compressed of an engaging portion and a portion to be engaged in pair which blocks the slide of the sliding shutter in both direction, it is possible to move in both direction and to double sides record of the disc cartridge apparatus. Further it is possible to accurately and easily lock or unlock the location of the sliding shutter.

According to the disc cartridge apparatus in the aspect as claimed in claim 3, since a slip-out preventing member having the hook on the sliding shutter defined to be located on both side of the shutter drive passage groove of the cartridge main body when the sliding shutter covers the opening to install the sliding shutter on the cartridge main body, it is able to prevent the sliding shutter from coming off from the cartridge main body in the operation of the sliding the sliding shutter as well as improve the engage strength of the sliding shutter with the cartridge main body.

According to the disc cartridge apparatus in the aspect as claimed in claim 4, as a part of the wall surface of the guide groove has been constructed with the engaging portion, the construction becomes simple and the unlocking of the locking mechanism and the sliding shutter open/close operation can be performed smoothly by the sliding shutter opening and closing member.

According to the disc cartridge apparatus in the aspect as claimed in claim 5, even if the sliding shutter is in a wrong position (incompletely covering position) in the operation of loading the disc cartridge into the disc apparatus it is impossible the tip of the shutter drive member to insert into the disc cartridge apparatus by blocking with a blocking member like a concave part defined on the cartridge main body. According to this, it is able to protect a disc cartridge apparatus as wall as prevent a malfunction.

According to the disc cartridge apparatus in the aspect as claimed in claim 6, when the sliding shutter is in a wrong position (incompletely covering position) in the operation of loading the disc cartridge into the disc apparatus, it is impossible the shutter drive member to insert into the disc cartridge by blocking with a blocking member like a convex or a concave part defined on the sliding shutter and further it is possible to perform a regular operation in reinsertion time by returning the sliding shutter in the regular position.

According to the disc cartridge apparatus in the aspect as claimed in claim 7, a locking mechanism includes a pair of portions to be engaged and engaging portions which prevent the sliding shutter from sliding in both directions. So, it becomes possible to slide the sliding shutter so as to allow both the sides of the disc cartridge being reproduced. While, it becomes possible to surely lock the sliding shutter at the close state or to easily release the lock.

According to the disc cartridge apparatus in the aspect as claimed in claim 8, the tip of the shutter drive member includes a pin with steps, and wherein portions to be engaged to the sliding shutter corresponding to it is shaped into a stepped shape slit. So, it is able to prevent that the shutter open/close member is erroneously disengaged from the engaged portion to the shutter.

According to the disc cartridge apparatus in the aspect as claimed in claim 9, the tip of the shutter drive member includes a pin with steps, and wherein a web-like rib engaging with the pin with steps is defined on the engaging portion of the locking mechanism. So, it is able to prevent that the pin with steps is erroneously disengaged from the engaging portion.

According to the disc cartridge apparatus in the aspect as claimed in claim 10, the intrusion passage of the shutter open/close member is slightly shifted in the direction opposite to the opening direction of the slit of the engaged portion. So, it is able to prevent the malfunction due to a clearance between the disc apparatus and the disc cartridge.

According to the disc cartridge apparatus in the aspect as claimed in claim 11, the cartridge main body is constructed by fitting the upper and lower case-halves in pair. So, it is able to improve the outlook of the disc cartridge. Further, since one case-half is provided with a variety of grooves with their one ends being opened, it is able to simplify the structure of a mold dye for molding the case half. Furthermore, since the upper and lower case-halves can be simply fitted together at their confronting surfaces, it is able to make easy the assembling work of the cartridge. Further, when an engaging hook structure is employed, it is able to improve the strength of the assembled structure of the cartridge.

According to the disc cartridge apparatus in the aspect as claimed in claim 12, a locking mechanism includes a pair of portions to be engaged and engaging portions which prevent the sliding shutter from sliding in both directions and a pair of the engaging portions are provided with a holding end face which is formed to face the opposite direction each other, thereby holding the sliding shutter. So, the locking mechanism is not visible from the outside, thus providing the fine exterior view and assuring the positive locating and locking in the sliding shutter closed state.

According to the disc cartridge apparatus in the aspect as claimed in claim 13, the sliding shutter is provided with a pair of engaging holes into which the sliding shutter opening and closing member enters to unlock the locking mechanism. These engaging holes are provided at the symmetrical positions to the point that becomes a substantial center of the directions of width and thickness of the end face of the main body of the cartridge apparatus when the sliding shutter is at the closed position. Therefore, even when the cartridge apparatus is turned over and mounted to a driving gear, it is possible to commonly use the sliding shutter opening and closing member.

According to the disc cartridge apparatus in the aspect as claimed in claim 14, the cartridge apparatus accommodating a disc having signal bearing surfaces on both sides, and even when the cartridge apparatus is turned over and mounted to a driving gear, it is possible to commonly use the sliding shutter opening and closing member and give a diversity to the design of a driving gear.

According to the disc cartridge apparatus in the aspect as claimed in claim 15, in addition to the construction as claimed in claim 13 or 14, the sliding shutter opens to both sides of the opening and the locking mechanism is provided with a first and a second engaging portions to prevent the sliding shutter from sliding to respective directions. Thus, it becomes possible to give a diversity to the arrangement of the sliding shutter opening and closing member.

According to the disc cartridge apparatus in the aspect as claimed in claim 16, the sliding shutter is so constructed that at least a part of its edge projects into the opening when the sliding shutter is at the open position. Thus, it becomes possible to modify the shape of the opening to a shape corresponding to an eccentric shape pickup that is generally used for a driving gear and save an unnecessary opening space.

According to the disc cartridge apparatus in the aspect as claimed in claim 17, as at least a part of the edge of the sliding shutter is cut in the same shape as a part of the driving opening so that the driving opening confronted by the driving gear is fully opened when the sliding shutter is at the opened position, it is possible to positively mount to the driving gear.

According to the disc cartridge apparatus in the aspect as claimed in claim 18, in the construction as claimed in claim 7 the corresponding points of the edge of the sliding shutter are cut in the same shape as a part of the driving opening with the driving gear confronted is fully opened at respective open positions when the sliding shutter opens to both sides.

According to the disc cartridge apparatus in the aspect as claimed in claim 19, the main body of the cartridge apparatus includes the first and the second halves which are arranged to face each other. Further, as these halves being assembled by engaging the engaging hooks with the engaging slits, the assembling work becomes simple.

According to the disc cartridge apparatus in the aspect as claimed in claim 20, as an engaging stopper is provided to the tip of the engaging portion to define the displacement, it is possible to prevent such accidents as the engaging portions being damaged resulting from unnecessary displacement.

According to the disc cartridge apparatus in the aspect as claimed in claim 21, the main body of the cartridge apparatus includes the first and the second halves which are arranged to face each other. The bank is provided to connect the opening to the first half. Further, this first half is provided with the first bridge with a specific space provided to the bank. The second bridge is provided to the second half to be laid over the first bridge in the direction of width. In addition, the engaging portions are provided to the second bridge. Therefore, as the engaging portions capable of being integrally molded with the second half and the main body of the cartridge apparatus capable of including two parts including the engaging portions, it is possible to obtain a disc cartridge apparatus which is low in parts count, has the improved operating reliability, is easy to manufacture and has a sufficient mechanical strength.

For a better understandings of the present invention and many of the attendant advantages thereof, reference will now be made by way of example to the accompanying drawings, wherein:
FIGURE 1 is a perspective view showing the construction of the preferred embodiment of the disc cartridge apparatus according to the present invention;
FIGURE 2 is an exploded view of the disc cartridge shown in FIGURE 1;
FIGURE 3(a) is a plan view showing the main part of the upper case-half;
FIGURE 3(b) is a front view showing the main part of the upper case-half;
FIGURE 4 is a perspective view showing the engaging hook of the sliding shutter inside;
FIGURE 5 is a plan view showing the state that the sliding shutter is installed in the cartridge main body;
FIGURES 6(a) and 6(b) are sectional flat views for explaining the movement of the engaging hook of the sliding shutter;
FIGURES 7(a), 7(b) and 7(c) are perspective views showing the loading process of the disc cartridge into the recording and reproducing apparatus;
FIGURES 8(a) and 8(b) are plan views showing the drive action of the sliding shutter in the loading operation;
FIGURES 9(a) through 9(d) are sectional flat views showing the drive action of the sliding shutter in the loading operation;
FIGURES 10(a) and 10(b) are plan views showing the taper portion defined on the guide groove and the locking spring hook;
FIGURE 11(a) a front view showing other embodiments of the engaging slit and the engaging pin form;
FIGURE 11(b) is a side view showing the other embodiments of the engaging slit and the engaging pin form;
FIGURE 12(a) is a side view showing still other embodiments of the engaging pin and the locking spring hook form;
FIGURE 12(b) is a plan view showing other embodiments of the engaging pin and the locking spring hook form;
FIGURE 13 is a plan view showing the cartridge structure employing the engaging pin and the locking spring hook shown in FIGURE 12;
FIGURE 14 is a perspective view showing the wrong insertion preventing protrusion defined on the front and rear side discrimination groove and recording and reproducing apparatus of the disc cartridge apparatus;
FIGURES 15(a) and 15(b) are plan views showing the malfunction preventing mechanism of the shutter drive member when the sliding shutter is in half-opened position;
FIGURES 16(a) and 16(b) are plan views showing the malfunction preventing mechanism of the shutter drive member and the returning to the regular position mechanism of the sliding shutter when the sliding shutter is in half-opened position; and
FIGURES 17(a) and 17(b) are plan views for explaining the operation of the member for preventing the malfunction by the clearance if the engaging pin and the engaging slit.

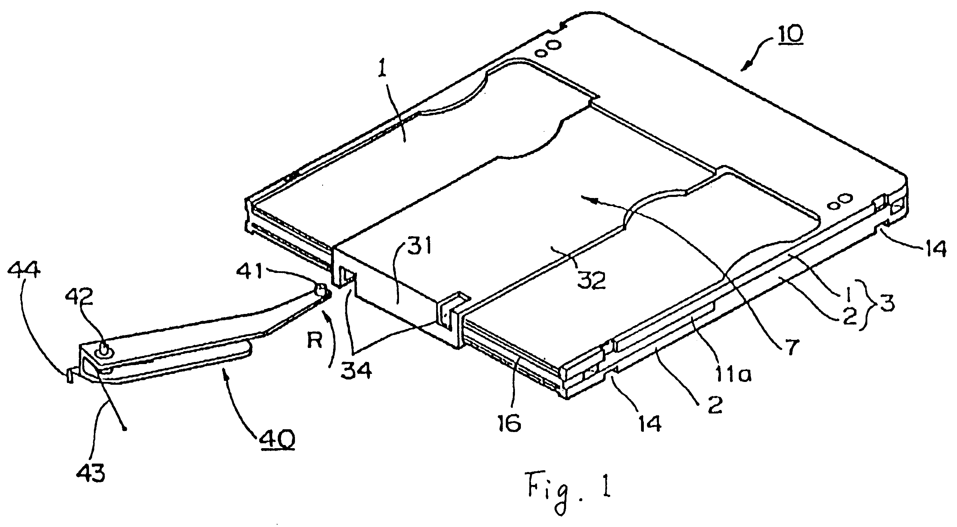

The present invention will be described in detail with reference to the FIGURES 1 through 17.

Throughout the drawings, like or equivalent reference numerals or letters will be used to designate like or equivalent elements for simplicity of explanation.

Referring now to the attached drawings, some preferred embodiments of the present invention will be described hereinafter.

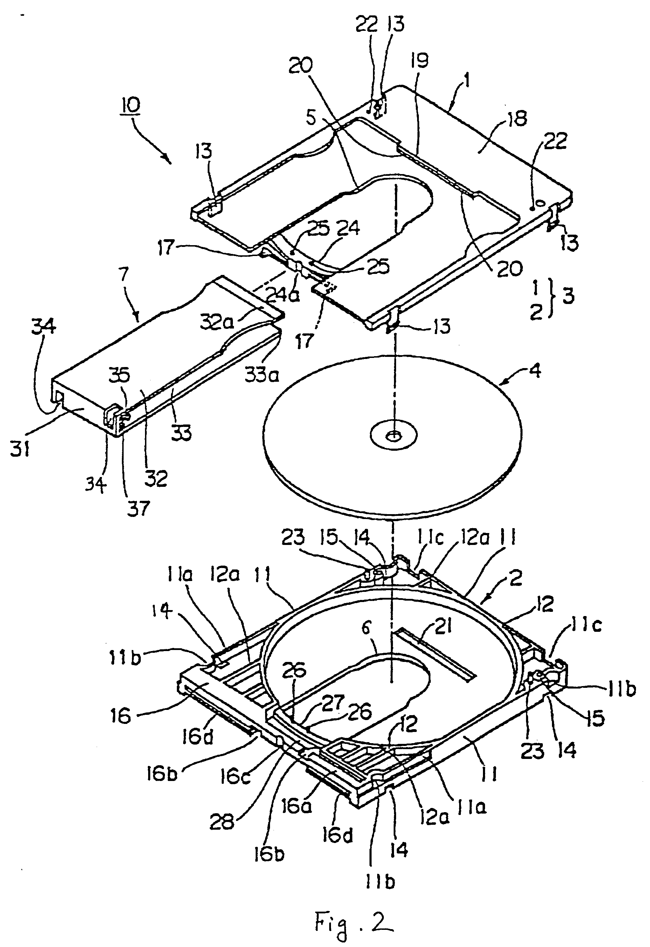

First, referring to FIGURE 2, a construction of a disc cartridge 10 will be briefly explained hereinafter.

In FIGURE 2 the disc cartridge 10 includes a cartridge main body 3, a disc 4 such as an optical disc or a magneto-optic disc rotatably accommodated in the cartridge main body 3 and a sliding shutter 7, which compose principle elements of the disc cartridge 10. The cartridge main body 3 has an upper case-half 1 and a lower case-half 2 which are joined by butt-jointing with each other. The upper case-half 1 and the lower case-half 2 are each formed in nearly a flat square plate shape by plastic moldings. The sliding shutter 7 open and close openings 5, 6 which are defined in the upper case-half and the lower case-half of the cartridge main body 3, respectively, and confronted by an optical pickup for recording or reproducing an information signal to or from the disc 4.

To join the upper case-half and the lower case-half for constituting the cartridge main body 3 the upper case-half is fitted into an upper surface of a front portion 16 defined on the lower case-half 2, an upper surface of an arcuate rib 12 and a support rib 12a extending form the arcuate rib 12 which is defined on the lower case-half and an upper surface of the side-wall 11 define on the lower case-half 2. Here many engaging hooks 13 having a hook on the tip defined on the upper case-half 1 are fitted into many engaging slits 14 defined on the lower case-half 2.

Simultaneously, many pins 23, 26 defined on the lower case-half 2 fitted into many engaging slit 22, 25 defined on the upper case-half 1. When the upper case-half 1 and the lower case-half 2 are joined in the butt-joint manner it is possible to make a room enough for accommodating the disc 4 in capable of rotating. Accordingly since the upper case-half 1 and the lower case-half 2 for constituting the cartridge main body 3 are joined in the butt-joint manner, it is easy to join the upper and lower case-halves 1, 2 at a touch and the outlook of the cartridge apparatus can be beautified. Further, since it has a fit-in-hook structure it is possible to hard the joining strength of the upper case-half and the lower case-half in assembled form.

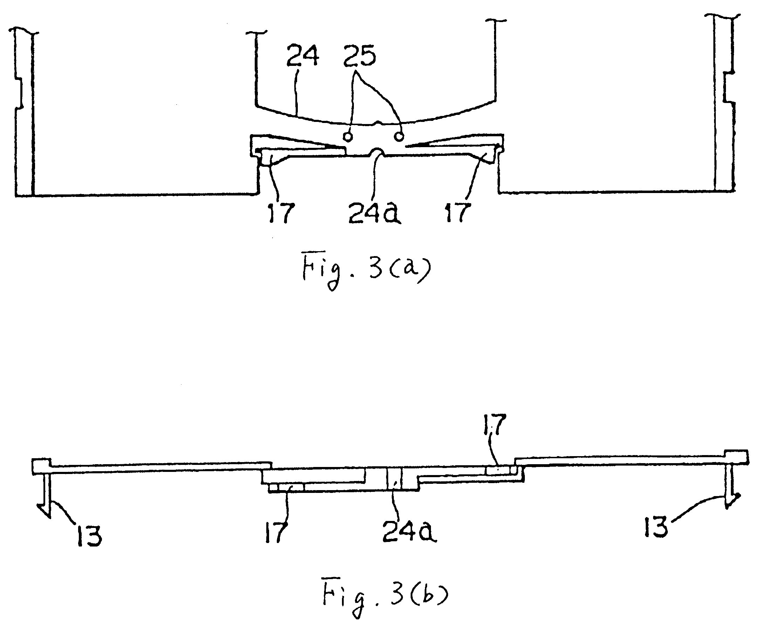

The openings 5, 6 are defined in the upper and lower walls of the cartridge main body 3. In extending along the radial direction of the disc 4 from the center of the cartridge main body 3. Thus the openings 5, 6 face the disc 4 over the outer end portion through the enter portion of the disc 4. Accordingly a disc table of a disc drive device in the recording and reproducing apparatus is able to supports the disc 4 through the openings 5, 6. To this end, these openings 5, 6 are each defined in nearly a rectangular shape extending from the center portion to the front end where the sliding shutter is provided, of the upper and the lower case-halves 1, 2 (note here the end portions of the openings 5, 6 facing the center of the disc 4 are defined in a round shape). A bridge portion 24 is defined on the front portion of the upper case-half 1 which is lower than the plane surface forming the opening 5, around the center portion of which many (there are two in the drawing) engaging slits 25 are formed and, on the front of the bridge portion 24 a pair of spring hooks 17, 17 are integrally formed with it, as shown in FIGURE 3(a). These spring hooks 17, 17 formed on the position slip out each other slightly (1 ∼ 2 mm) in vertical direction on the front side of the bridge portion 24, as shown in FIGURE 3(b). Further, a concave portion 24a on the front side of the bridge portion 24 around the center portion of the spring hooks 17, 17 for preventing a movement of an engaging pin 41 of a shutter drive member 40 (see FIGURE 1) which is inserted in the cartridge main body 3 by mistake while the sliding shutter 7 is in the incompletely covering position.

Further an engaging protrusion 26 is formed on a bridge portion 27 which is shaped into arc like shape forming in a line with a circular arc rib on the front surface of the opening of the lower case-half 2. And, a shutter guiding bunk a defined on further onward of the bridge portion 27 which comprises a part of a front portion 16 parted by a space which will be a guiding opening 28 (hereinafter referred to as guide groove). Shutter drive passage grooves 16b, 16b are defined on a bank portion 16a on the center of the front portion 16, which formed to not face respectively on both side of center part of the front portion 16. Further, a concave portion 16c on the front side around the center portion of the sliding shutter driving passages 16b, 16b for preventing a movement of a engaging pin 41 of the shutter drive member 40 which inserted in the cartridge main body by mistake while the sliding shutter 7 is in the incompletely covering position.

Further a plurality of the arcuate ribs 12 are formed on the inner surface of the lower case-half 2, with a circle larger than the disc 4. These arcuate ribs 12 form a disc position controlling wall for controlling the horizontal position of the disc 4. The arcuate ribs 12 also define a disc housing for housing the disc 4.

The front portion of the opening 5 of the upper case-half 1 is cut off for providing a space which allows the engaging pin 41 (see FIGURE 1) mounted on the tip end of the shutter drive member 40 to enter into the guide grooves 28, 28 when the disc cartridge comes close to the shutter drive member 40 which will be described later. Around the center portion of the cut-off portion of the upper case-half 1, a pair of the spring hooks 17, 17 for locking the sliding shutter 7 in the covering position are integrally formed with the upper case-half 1 as described above.

Further, in the upper case-half 1 engaging hooks 19, 19 extend from a thick plate 18 on the rear end of the upper case-half 1 in parallel with the lain surface of the upper case-half 1 toward the opening 5. These engaging hooks 19, 19 are spaced apart from the main surface (in which the opening 5 is defined) of the upper case-half 1 for allowing a stepdown portion (i.e., thin plate portion) 32a provided on the tip end of the sliding shutter blade 32 of the sliding shutter 7 to be inserted therebetween. Since the engaging hooks 19, 19 are integrally formed with the upper case-half 1 using a cavity-mold die, a pair of slots 20, 20 are defined in the main surface of the upper case-half 1 on positions facing the engaging hooks 19, 19. The slots 20, 20 have widths a little wider than the widths of the engaging hooks 19, 19 by a given amount allowing the cavity-mold die to be extracted in the direction orthogonal to the main surface of the upper case-half 1. Further the slots 20, 20 formed simultaneously with the engaging hooks 19, 19 are designed to be covered at an amount of the width of sliding of the sliding shutter 7 when the sliding shutter 7 covers the openings 5, 6, so that it can prevent dusts from applied on the information bearing surface of the disc 4 through the slots 20, 20 when the openings 5, 6 are covered.

Further another pair of engaging hooks (not shown) for engaging in capable of sliding a tip end (also formed in such a stepdown state or a thin plate state) of another shutter blade 33 of the sliding shutter 7 to be inserted and engaged therewith. While the lower case-half 2 is defined slots 21, 21 on positions facing these engaging hooks.

Since the width of the sliding shutter 7 along the sliding direction is made the one thirds of the width in the longitudinal direction of the cartridge main body 3, and the engaging hooks 19, 19 are spaced apart from each other by about the width of the sliding shutter 7, the former slots 20, 20 and the latter slots 21, 21 are covered by the tip end of the sliding shutter 7 when the sliding shutter 7 covers the openings 5, 6. By the same reason if the sliding shutter 7 slides laterally from the position covering the openings 5, 6 the tip ends of the sliding shutter blades 32, 33 can slide in always engaging with one of the engaging blades 19, 19.

The sliding shutter blades 32, 33 of the sliding shutter 7 are oppositely provided in facing the upper face and the lower face of the cartridge main body 3 by bending a thin metal plate or an engineering plastic plate into a 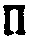 -like shape. That is, the sliding shutter 7 comprised the upper and lower shutter blades 32, 33 which extend for covering enough the from a coupling piece 31 in the form of bending the plate.

The coupling piece 31 of the sliding shutter 7 is provided with engaging slits 34, 34 for being engaged with the engaging pin 41 (see FIGURE 1) of the shutter drive member 40, on positions facing the spring hooks 17, 17 provided to the cartridge main body 3 for use of locking when the sliding shutter 7 is in the position covering the openings 5, 6. These engaging slits 34, 34 are provided so as to the free ends of the spring hooks 17, 17 in the course of assembling the sliding shutter 7 to the cartridge main body 3. Here, the reason why that the two pairs of the spring hook 17 and the engaging slit 34 are provided on both sides in reference to the center of the cartridge main body 3 is that, for instance the pair of the spring hook 17 and the engaging slit 34 on the right side is used for recording or reproducing information to or from one the side A of the disc 4, while the other pair of the spring hook 17 and the engaging slit 34 on the left side is used for recording or reproducing information to or from the other the side B of the disc 4. Another reason is to have a flexibility in designing the recording and reproducing apparatus so as that the sliding shutter 7 can slide in either direction for being to with a flexibility of sliding directions for the sliding shutter 7 for recording or reproducing information to or from the one side. e.g., the the side A of the disc 4.

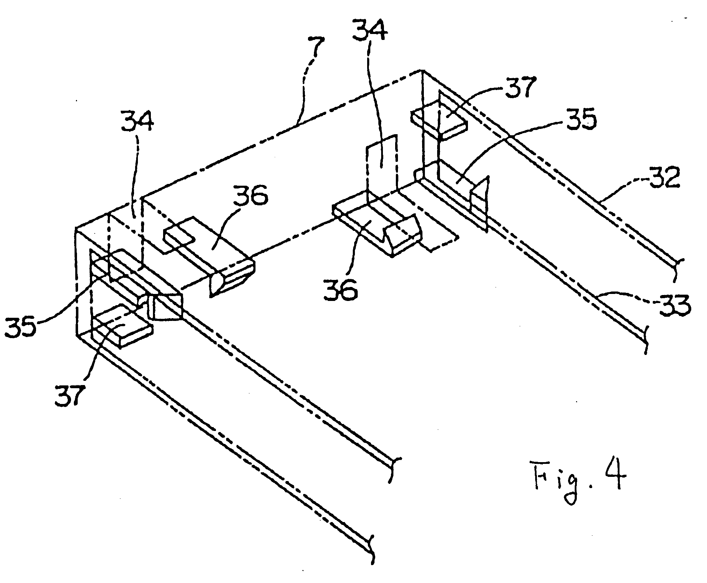

Further, the coupling piece 31 is provided with engaging hooks 35, 36, 37 on both sides of its inner surface in integral with the coupling piece 31, as shown in FIGURE 4. These engaging hooks 35, 36, 37 extend in parallel with the surfaces of their corresponding shutter blades 32, 33 between thereof. Further, the engaging hooks 35, 36 are located at regular intervals corresponding to the width of the engaging slit 34 on the same surface. The engaging hooks 35, 37 are located at regular intervals corresponding to thickness of the bank portion 16a of the front portion 16 of the lower case-half 2 mutually.

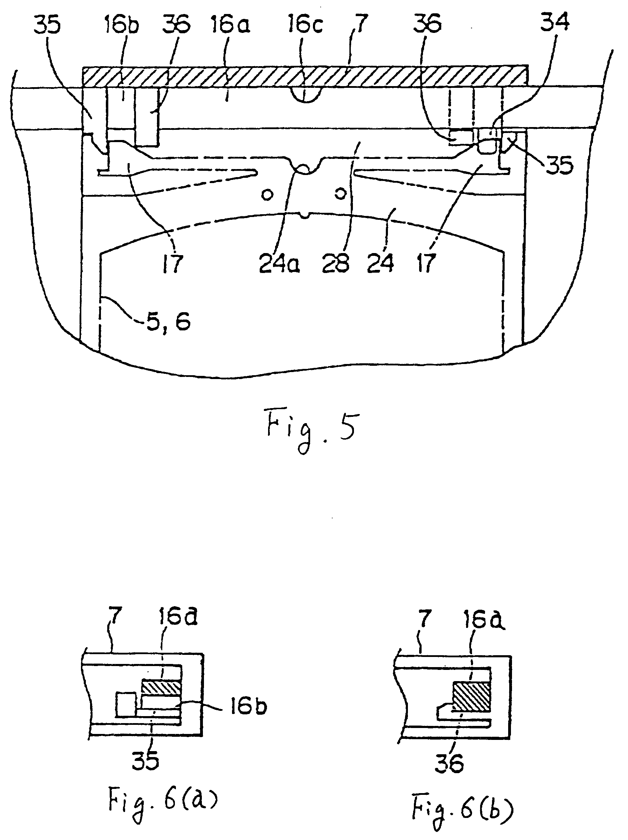

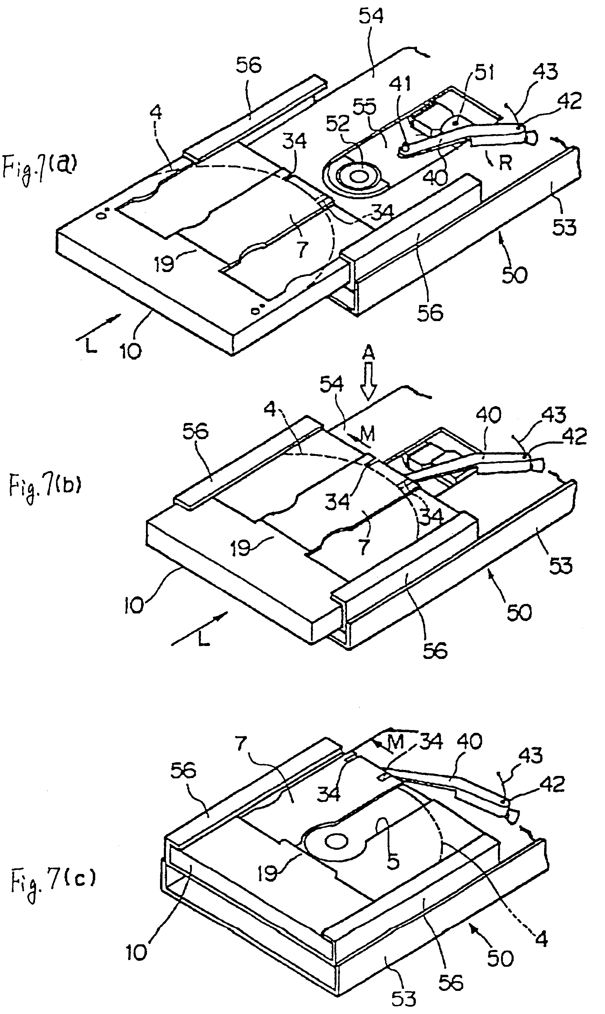

When the sliding shutter 7 is inserted into the cartridge main body 3 which rotatably accommodates the disc 4 between the upper case-half 1 and the lower case-half 2, from the front of the openings 5, 6, hook portions made on the tip ends of the engaging hooks 35, 36 which are in extension piece inner surface of the sliding shutter 7, as shown in FIGURES 7(a) and 7(b), are engaged with the upper surface or the lower surface of the sliding shutter driving bank 16a of the lower case-half 2. The engaging hooks 35, 37 are engaged to put the upper and lower surfaces of the sliding shutter driving bank 16a between, simultaneously with the insertion of stepdown portions on the tip ends of the sliding shutter blades 32a, 32a into the engaging hooks 19, 19. When the sliding shutter 7 is in the position covering the openings 5, 6 at this point, the engaging hooks 35 (or 37) and 36 are located on both sides of the shutter drive passage groove 16b. Accordingly, even if the sliding shutter slides (in left direction in FIGURE 5) by unlocked and, the engaging hook 19 moves to the bottom of the shutter drive passage groove 16b, as shown in FIGURE 6(a), so as to disengage with the sliding shutter driving bank 16a which will be described later. It is possible to slide the sliding shutter without being removed from the cartridge main body 3 by engagement of the other engaging hook 36 with the bank 16a. It is thus possible to improve the engaging strength of the cartridge main body 3.

When the sliding shutter 7 is in the position covering the openings 5, 6 in the operation of installing the sliding shutter 7 in the cartridge main body 3, the engaging blades 17, 17 of the upper case-half 1 engage with the engaging slits 34, 34 so as to block or lock the slide of the sliding shutter 7. This locking state can be released by depressing to resiliently deform one of the spring hooks 17 toward the rear end of the openings 5, 6 using the engaging pin 41 of the shutter drive member 40 (see FIGURE 1).

On the other hand, a various kind of grooves are formed so that the bottoms of the grooves face against the outside defection on the side-wall 11 of the lower case-half 2. A wrong insertion discriminating groove 11a formed on both sides of the front end of the lower case-half 2 at prescribed length for discriminating the front portion and the rear portion, or the right side or not of the disc cartridge, or for discriminating the cartridge of the same kind or not. A changer gripping groove 11c for auto changer is formed on both sides of the side-wall 11 of the lower case-half 2. A plurality of grooves 11b (four grooves are shown in the drawings) for leading the cartridge main body 3 therein are formed on the side-wall 11 of the lower case-half 2. These grooves 11b are formed so that the plane surface containing the one edge of the grooves 11b will be the half fitting surface defined on the lower case-half 2 which comprises the cartridge main body 3. Referring to the wrong insertion discriminating grooves 11a, the length or the direction of vertical direction of these grooves 11b are not same.

According to this, since these grooves 11b are formed so that one side of the groove 11b will be an opening side on the one case-half 2, it is possible to simplify a metal mold structure necessary for molding.

Further, fiducial pits 15, 15 for defining the position, of the disc cartridge 10 in loading into the recording and reproducing apparatus are provided in an area given by the side-walls 11 on both rear corners opposing the front portion 16 of the lower case-half 2 where the sliding shutter 7 is to be applied. When the disc cartridge 10 is loaded into the recording and reproducing apparatus (not shown), the disc cartridge 10 is defined its horizontal position by positioning pins of the disc cartridge 10 being engaged with the fiducial pits 15, 15. Furthermore the disc cartridge 10 is also provided a pair of positioning pins for defining the vertical position of the disc cartridge 10 by supporting the main surfaces of the disc cartridge 10.

Thus the disc cartridge 10, as shown in FIGURE 1, is resulted by combining the upper case-half 1 and the lower case-half 2 in rotatably accommodating the disc 4 therebetween.

FIGURE 1 shows the disc cartridge apparatus having the disc cartridge 10 and the shutter drive member 40.

In FIGURE 1 the shutter drive member 40 comprises a revolving lever slightly bent like the L letter shape. Its base end is rotatably pivoted on a loading chassis of the recording and reproducing apparatus by a rotary shaft 42, while on its free end the engaging pin 41 to be engaged into the engaging slits 34, 34 of the sliding shutter 7 is perpendicularly mounted thereto. The shutter drive member 40 is then biased to swing in the direction of the arrow R by a spring 43, while a rotation restricting member 44 for defining the rotating angle of the shutter drive member 40 projects into the recording and reproducing apparatus in the neighbor of the base end of the shutter drive member 40. When the shutter drive member 40 is in the state shown in the drawing, it is possible to rotate in the clockwise against the rotary power (in the direction opposite to the arrow R) from this state.

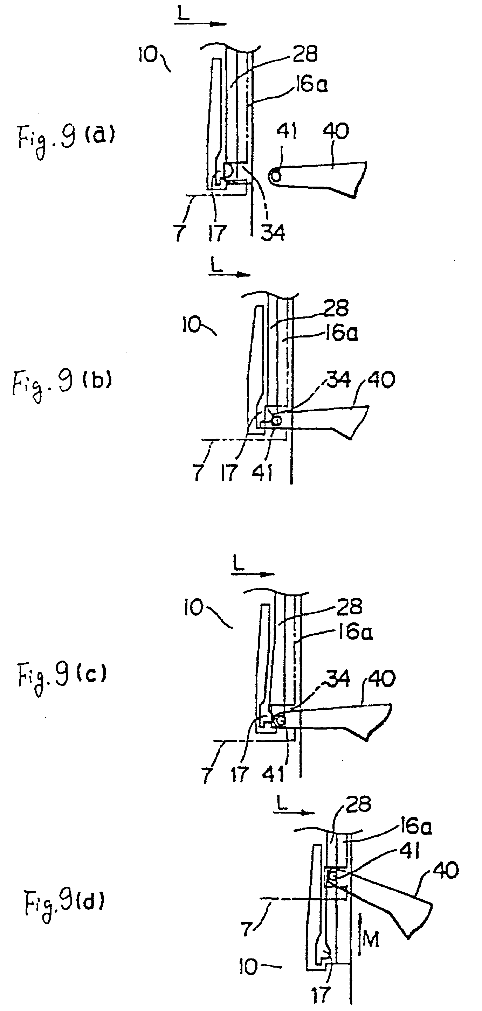

Now, the operation of the disc cartridge apparatus of FIGURE 1 will be explained in reference to FIGURES 7(a) through 7(c) and FIGURES 9(a) through 9(d).

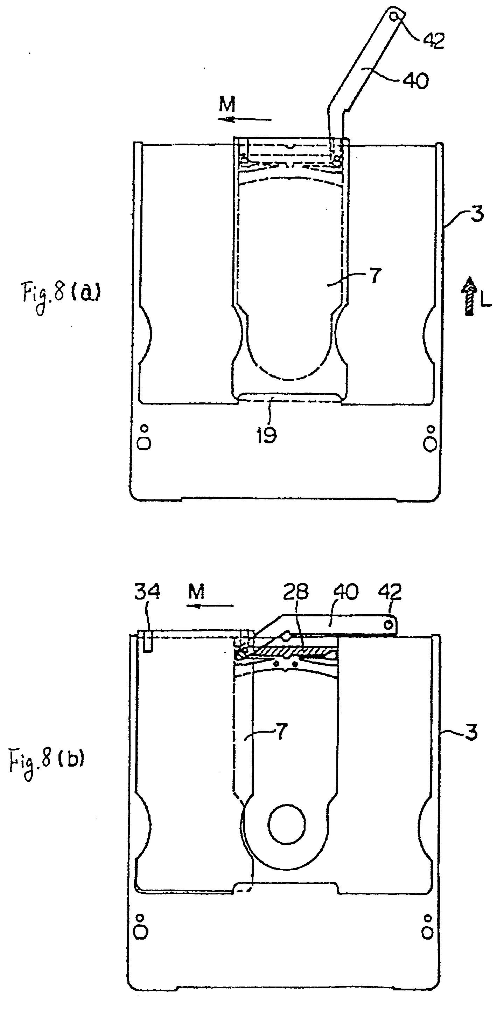

FIGURES 7(a) through 7(c) show the process of loading the disc cartridge into the recording and reproducing apparatus in perspective views. FIGURES 8(a), 8(b) and FIGURES 9(a) through 9(d) show the process of the drive operation of the sliding shutter in the loading operation.

The recording and reproducing apparatus 50, as shown in FIGURES 7(a) through 7(c), comprises an optical pickup 51, a disc driving apparatus 52, a case proper 53 accommodating a recording and reproducing circuit, and a loading chassis 54 provided on the case proper 53 for loading the disc cartridge 10. On the loading chassis 54, an opening 55 for exposing the optical pickup 51 and the disc driving apparatus 52 is defined, while loading guides 56, 56 for guiding the disc cartridge 10 are projected therefrom. The opening 55 is defined in a position so as to face the opening 5, 6 of the cartridge main body 3. The lever-shaped shutter drive member 40 is rotatably pivoted on the rear portion of the loading chassis 54 by the rotary shaft 42 and then biased in the direction as indicated by the arrow R, but limited its rotating range as mentioned before. The loading chassis 54 shown in the drawings is located on a vertical drive mechanism (not shown) so that it is movable in the vertical direction, but not movable in the horizontal direction. Thus the loading chassis 54 can operate to guide in the downward direction the disc cartridge 10 as that the disc cartridge 10 is placed on the disc drive apparatus 52.

As shown In FIGURE 7(a), the cartridge 10 rotatably accommodating the disc 4 in the cartridge main body 3 is inserted in the direction as indicated by an the arrow L along the loading guides 56, 56 provided on the cassette loading sliding shutter 7 and the engaging pin 41 of the shutter drive member 40 are related to position on the same line in relation to the inserting direction.

Then, when the disc cartridge 10 is inserted further in the direction as indicated by the arrow L, the engaging pin 41 of the shutter drive member 40 is fitted in the engaging slit 34 of the sliding shutter 7, as shown in FIGURES 7(b) and 8(a). In this state the engaging pin 41 of the shutter drive member 40 bumps against a protrusion from the spring hook 17 of the upper case-half 1 present in the engaging slit 34 of the sliding shutter 7 through the sliding shutter driving passage groove 16b so as to depress the spring hook 17 for releasing spring hook 17 from its locked state with the inner surface of the engaging slit 34 and thus allow the sliding shutter 7 to slide in the direction as indicated by the arrow M which is perpendicular to the direction of the arrow L.

When the disc cartridge 10 is inserted furthermore in the direction as indicated by the arrow L, the sliding shutter 7 in engage with the engaging pin 41 also slides more in the direction as indicated by the arrow M so as that the opening 5 and the corresponding opening 6 on the side of the optical pickup 51 are fully uncovered, since the engaging pin 41 on the tip end of the shutter drive member 40 moves in the direction of the arrow M along the guide space which is spaced by the band 16a of the front portion of the lower case-half 2 and the spring hook 17 of the upper case-half 1 (it is called a guide groove, which is shown by slant line in FIGURE 8(b). In this state, the disc cartridge 10 is located on the loading chassis 54. After that the disc cartridge 10 is lowered to the recording or reproducing position by the vertical drive mechanism. Thus the loading operation of the disc cartridge 10 is completed.

As shown in FIGURE 8(c), the edges of the sliding shutter 7 at the sides near the openings 5 and 6 are partially positioned on the openings under the state where the sliding shutter 7 moved in the direction M fully to the end of a main body 3 of a cartridge apparatus. That is, the openings 5, 6 are not fully opened but they are partially concealed by the sliding shutter 7 and their shapes are one-sided to the center line of the main body 3 of the cartridge apparatus. On the other hand, the optical pickup 51 which performs the recording and reproduction of signals to or from a disc is generally provided in the housing to move in the vertical and horizontal directions by a specific distance in order to perform focusing and tracking and a driving mechanism for this purpose is provided at almost the center of the housing. In addition, the optical pickup 51 includes an optical system and its optical path is provided at a position away from the driving mechanism for focusing and tracking or away from the center of the housing. That is, the optical system included in the optical pickup 51 is at a position away from the center of the housing. Accordingly, that the openings 5, 6 are at positions away from the center is favorable when mounting the optical pickup 51 to the driving gear and even when the optical pickup 51 is mounted at a position away from the center of the main body 3 of the cartridge apparatus corresponding to the openings 5, 6, it is possible to position the optical system at near the center of the main body 3 of the cartridge apparatus. Further, as the openings 5, 6 are not opened unnecessarily, an effect to prevent entry of dust is also obtained.

Further, in the state shown in FIGURE 8(c), the central part of the openings 5, 6, through which a disc clamp mechanism of the driving gear penetrates is partially formed in a circular shape adapting to the shape of the clamp mechanism and the corresponding part of the sliding shutter 7 is also partially cut to the same shape so that the openings are fully opened. Thus, when mounted in the driving gear, a disc is positively clamped.

The relation between the sliding shutter 7 and the openings 5, 6 is also applicable when the sliding shutter 7 is opened in the direction opposite to the direction M.

The drive action of the sliding shutter 7 in the loading operation will be explained in detail in reference to FIGURE 9(b). In FIGURES 9(a) through 9(d) a portion viewed in the direction as indicated by an arrow A In FIGURE 7(b) is illustrated.

FIGURE 9(a) shows a process in which the disc cartridge 10 moves in the direction of the arrow L (loading direction). In this process the engaging hook 35 of the sliding shutter 7 installed in the cartridge main body 3 and the each other. In this state, the inner surface of the sliding shutter 7 is engaged with the spring hook 17.

FIGURE 9(b) shows the state that the disc cartridge 10 has moved furthermore in the direction of the arrow L and thus the engaging pin 41 of the shutter drive member 40 engages with the engaging slit 34 of the sliding shutter 7. In this state the engaging pin 41 bumps against the protrusion of the spring hook 17.

FIGURE 9(c) shows the state that the disc cartridge 10 has moved furthermore in the direction of the arrow L and thus the protrusion of the spring hook 17 is depressed by the engaging pin 41. In this state, the sliding shutter 7 is unlocked by disengagement of the spring hook 17 from the inner surface of the engaging hook 35.

FIGURE 9(d) shows the state that the disc cartridge 10 has moved furthermore in the direction of the arrow L. In this state the sliding shutter 7 is unlocked its engagement with the spring hook 17 as mentioned above. Also the engaging pin 41 of the shutter drive member 40 moves in the direction of the arrow M along the guide groove 28 in engaging with the engaging slit 34 of the sliding shutter 7 (the state of FIGURE 9(d) corresponds to the state, as shown in FIGURE 7c). Accordingly the sliding shutter 7 also moves in the direction of the arrow M so as to uncover the openings 5, 6 of the cartridge main body 3.

In the state that the openings 5, 6 are uncovered, when the disc cartridge 10 is pulled in the direction against the arrow L for unloading the disc cartridge 10, the engaging pin 41 of the shutter drive member 40 moves in the direction opposite to the loading direction against the arrow L by being guided by the guide groove 28. Thus the unloading process advances in the order of the states of FIGURES 9(c), 9(b), 9(a) in contrary to the above-mentioned. And then the disc cartridge 10 is unloaded after the sliding shutter 7 has moved again its covering position for the openings 5, 6. That is, the guide groove 28 and the engaging pin 17 are disengaged from each other only after the sliding shutter 7 has returned to the covering position so as that the disc cartridge 10 is unloaded from the recording and reproducing apparatus 50. Accordingly there not occurs that the disc cartridge 10 is unloaded from the recording and reproducing apparatus 50 in a state where the sliding shutter 7 is on the half-way between the covering position and the uncovering position for the openings 5, 6. This makes sure to protect the information-bearing surface of the disc 4 in the disc cartridge 3 form the dusts etc.

Further, when the disC cartridge 10 is loaded into the recording and reproducing apparatus 50 at a state that the disc cartridge is reversed upside down, the drive operation of the sliding shutter 7 is performed in the same process as mentioned above.

Further, the optical pickup 51 for recording or reproducing information to or from the disc 4 may be movably mounted so as that it may selectively confront the openings 5, 6. In this case as a matter of course there is not need to reverse the sides of the disc cartridge 10 upside down.

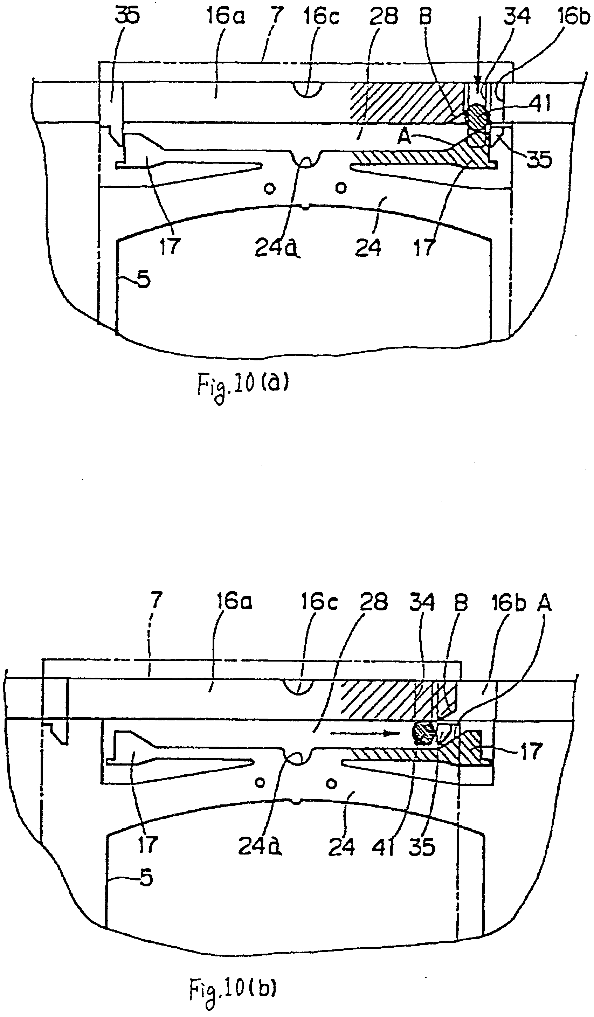

FIGURES 10(a) and 10(b) show the locking engaging hook 17 and the guide groove 28 of the lower case-half 2 in the above embodiments. A taper A is formed on the engaging hook 17, and a taper B is formed on the band 16a comprising the one side-wall of the guide groove 28.

FIGURE 10(a) shows the state that the engaging pin 41 of the shutter drive member 40 bumps against the protrusion of the spring hook 17 by its entering the sliding shutter engaging slit 34 of the disc cartridge 10. Since the taper A are formed along the guide groove 28 from the protrusion of the spring hook 17 the engaging pin 4 of the shutter drive member bumps against the spring hook 17 smoothly, so as to release the locking state in the operation of sliding the sliding shutter 7, and thus, it is possible to improve the touch of the loading of the cartridge in the loading operation.

FIGURE 10(b) shows the state that the engaging pin 41 of the shutter drive member 40 moves from the corner of the band 16a to the shutter drive passage groove 16b along the guide groove 28 when the disc cartridge 10 is unloading from the recording and reproducing apparatus 50. Since a taper B is defined on the corner of the band 16, the engaging pin 41 of the shutter drive member against the corner of the band 16a smoothly so as to get to the shutter drive passage groove 16a, and thus it is possible to improve the touch of the unloading of the disc cartridge in the unloading operation.

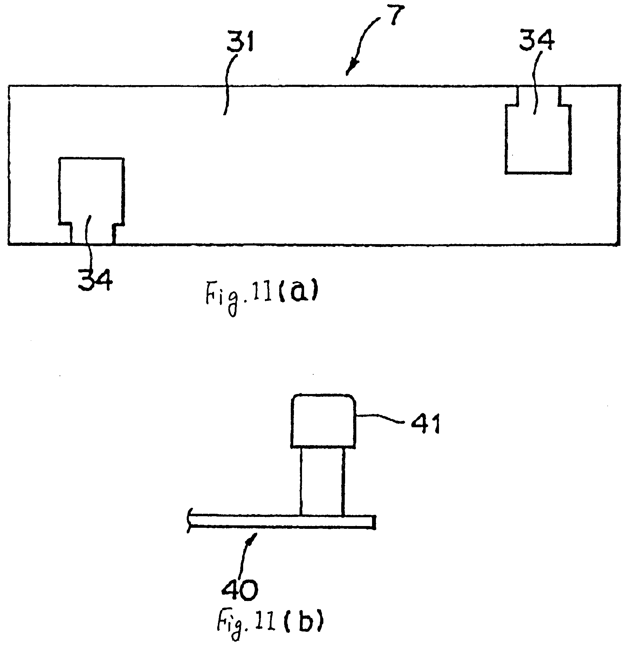

FIGURES 11(a) and 11(b) show a front view and a side view which will be embodiments showing other form of the engaging slit 34 of the sliding shutter and the engaging pin 41 of the shutter drive member 40 engaging with it. FIGURE 11(a) shows a front view of the sliding shutter 7, while FIGURE 11(b) shows a side view of the engaging pin 41. Since the engaging pin is shaped with steps, as shown in FIGURE 11(b), and the engaging slit 34 of the sliding shutter correspond to it is also shaped with steps, as shown in FIGURE 11(a), it is possible to prevent the engaging portion 41 of the shutter drive member from coming off from the portion to be engaged of the sliding shutter.

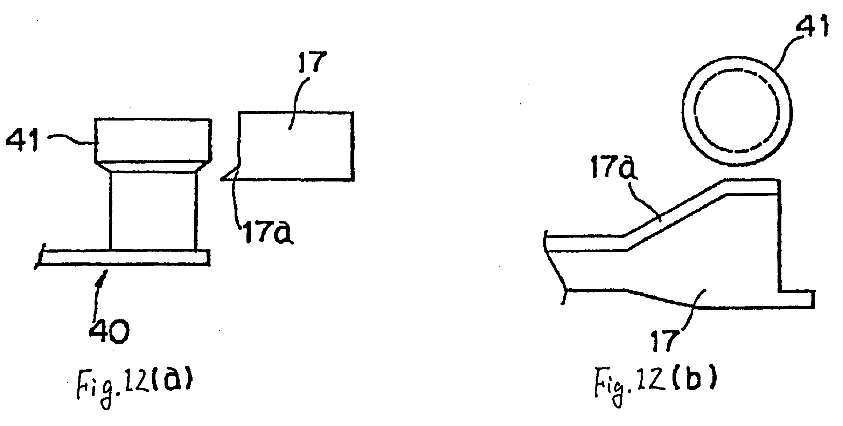

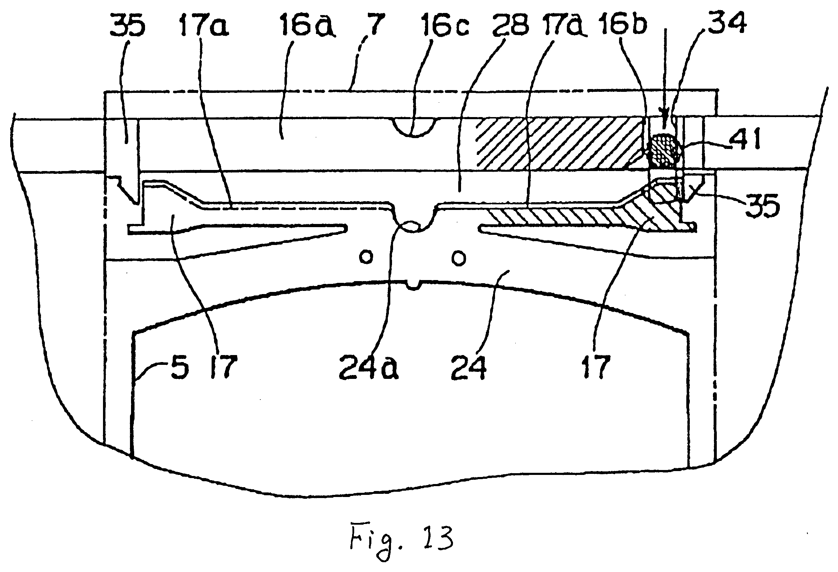

FIGURES 12(a) and 12(b) show a side view and a plan view which will be embodiments showing other form of the engaging pin of the shutter drive member 40 and the locking spring hook 17 which slide by bumping against it. FIGURE 12(a) shows a side view and FIGURE 12(b) shows a plan view. The engaging pin 41 of the shutter drive member 40 is shaped a taper-shaped with steps and a web-like rib 17a which suit to the steps of the pin 41 with steps is defined on the pin engaging portion (bumping portion) of the locking spring hook. Accordingly, since the pin 41 with steps of the shutter drive member engages with the web-like rib 17a formed of the locking spring hook 17 it is possible to slide the engaging pin 41 smoothly as well as to prevent it from coming off from the spring hook 17 against to shake in vertical direction when the engaging pin 41 of the shutter drive member 40 slides along the guide groove 28 by engaged with the engaging slit of the sliding shutter 7, as shown in FIGURE 13, in the shutter open/close operation.

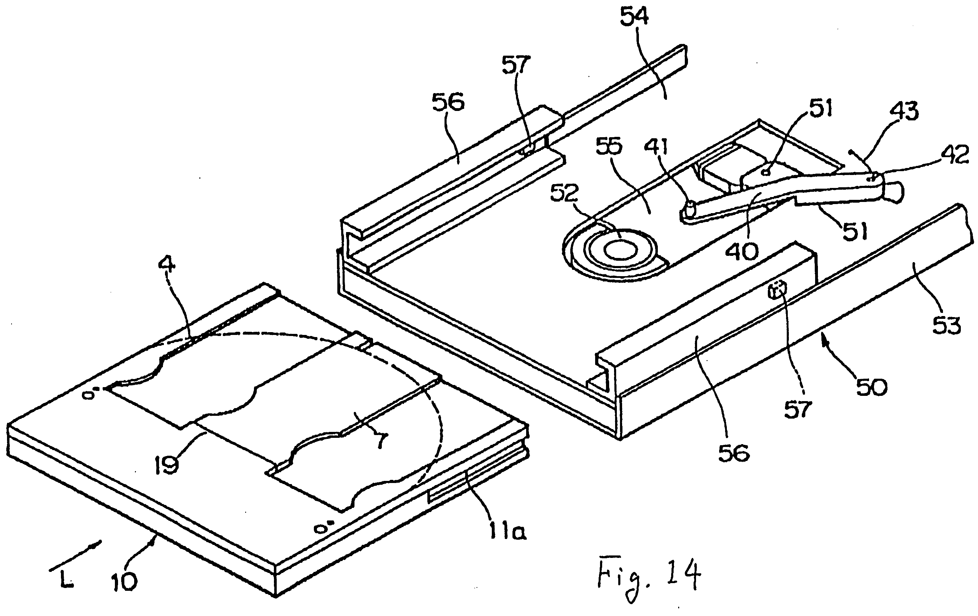

FIGURE 14 shows a perspective view for explaining the wrong insertion discriminating groove 11a formed on the both sides of the cartridge main body of the disc cartridge 10. The disc cartridge 10 is inserted from the side forming the wrong insertion discriminating groove 11a of the disc cartridge 10 when it is inserted along the loading guides 56, 56 provided on the loading chassis 54 in the loading operation. Protrusions 57, 57 for preventing the wrong insertion are formed on inner face (cartridge sliding surface) of the loading guides 56, 56. When the disc cartridge 10 is correctly inserted in the loading guides 56, 56, since the protrusions 57, 57 provided in the loading guides 56, 56 engage with the wrong insertion discriminating groove 11a of the disc cartridge the loading operation will be correctly performed. On the contrary, when the disc cartridge 10 is inserted in the loading guides 56, 56 from the rear side of it by mistake, since the rear portion of the cartridge bumps against the wrong insertion preventing protrusions 57, 57 so as to block the insert of it after inserted halfway it is possible to prevent a wrong insertion.

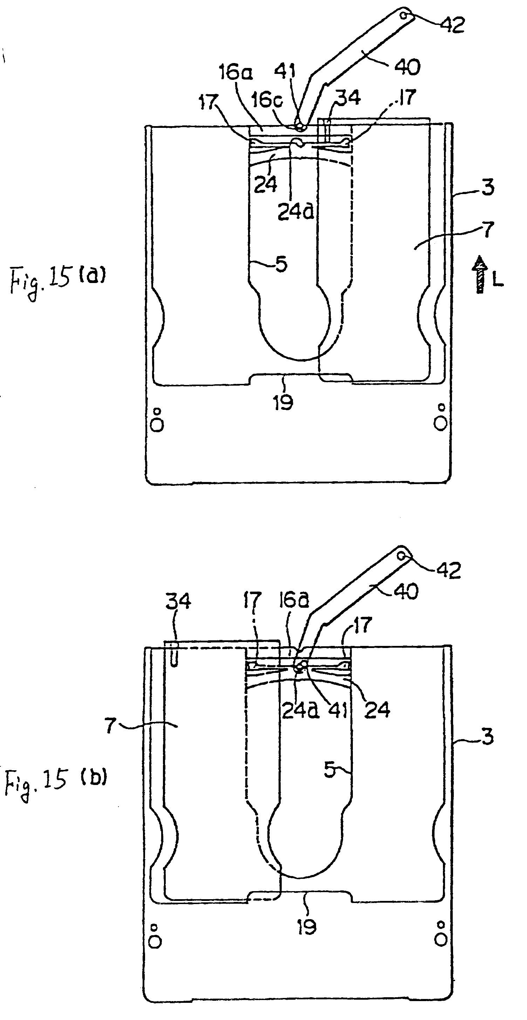

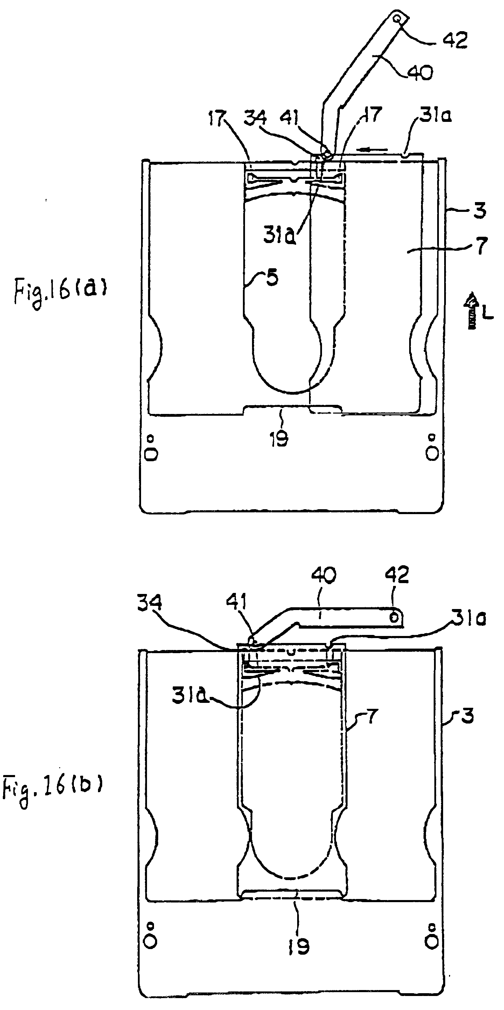

Now, a wrong insertion preventing method when the sliding shutter 7 in half-opened position of the disc cartridge 10 is inserted in the disc recording and reproducing apparatus 50 will be explained in reference to FIGURES 15(a), 15(b) and FIGURES 16(a), 16(b).

FIGURE 15(a) shows that when the cartridge main body 3 with the sliding shutter in decentered position (right side) bumps against the engaging pin 41 of the shutter drive member 41 the engaging pin touches the sliding shutter 7 and moves in left direction in drawing at the same time the cartridge main body 3 is inserted in the recording and reproducing apparatus at first. And then, it is prevented from moving by a pin preventing concave portion 16c formed of the front side bank 16a of the cartridge main body 3.

FIGURE 15(b) shows that when the engaging pin 41 of the shutter drive member 40 bumps against the bridge 24 of the cartridge main body 3 with the sliding shutter in decentered position (left side) by going in the guide grove 28 through the shutter drive passage groove 16b, the engaging pin 41 is prevented from moving by the pin preventing concave position 24a formed on the bridge 24 of the cartridge main body 3.

Accordingly, even if the sliding shutter is in a wrong position (incompletely covering position) in the operation of loading the disc cartridge 10, the disc recording and reproducing apparatus fails to insert the disc cartridge 10 by locked with a locking member 16c like concave part defined on the cartridge main body. According to this, it is possible to protect a disc cartridge apparatus as well as prevent a malfunction.

FIGURES 16(a) and 16(b) shows that when the sliding shutter 7 of the disc cartridge 10 in decentered position (right side) bumps against the engaging pin 41 of the shutter drive member 40 it is possible to prevent the engaging pin 41 from going in the engaging slit 34 by the pin preventing concave portion 31a formed on the front side of the extension piece 31 of the sliding shutter 7 (see FIGURE 16(a)) at the same time it is also possible to slide the sliding shutter 7 in the direction as indicated by an arrow so as to return in center (see FIGURE 16(b)). Since the sliding shutter 7 is located in the center by engaging the spring hook 17 with the engaging hook 35 when the sliding shutter 7 returns to the regular portion (that is, to the center) it is possible to extract or reinsert the disc cartridge 10 from/to the disc apparatus. Here, it may well to replace the concave 31a with the convex.

Accordingly, when the sliding shutter is in a wrong position (incompletely covering position) in the operation of loading the disc cartridge 10 into the disc apparatus, it is impossible the shutter drive member 40 to insert into the disc cartridge by blocking with a blocking member like a convex part or a concave part defined on the sliding shutter. Further it is possible to perform a regular operation in reinsertion time by returning the sliding shutter in regular position.

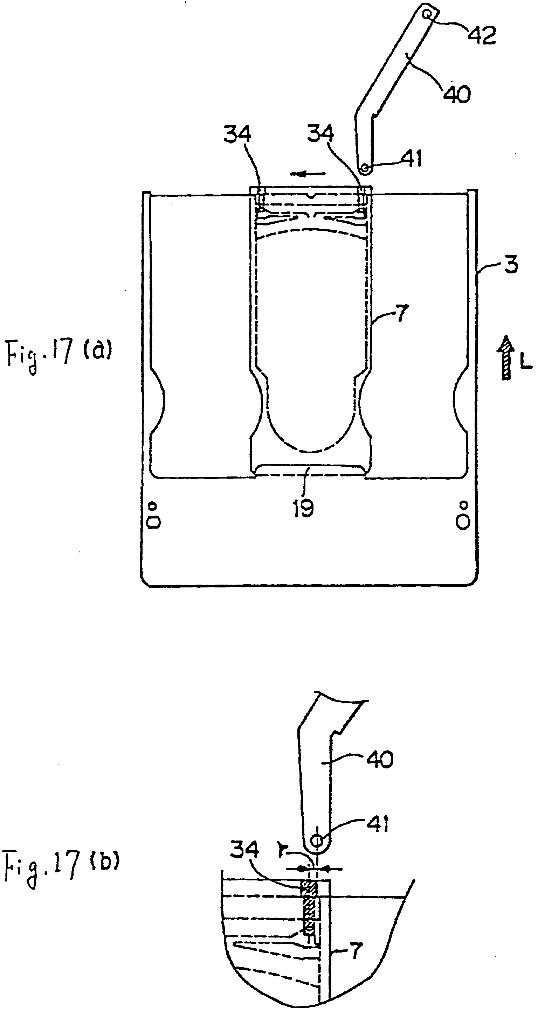

FIGURES 17(a) and 17(b) are plan views of the other embodiment for showing the position of the engaging pin 41 of the shutter drive member 40 and the engaging slit 34 of the sliding shutter 7. FIGURE 17(a) shows a general view, while FIGURE 17(b) shows an enlarged view of the principal portion.

FIGURES 17(a) and 17(b) shows that the entering portion of the engaging pin 41 of the shutter drive member 40 in the engaging slit 34 of the sliding shutter 7 in the engaging operation is decentered at a distance r in opposite direction to the sliding shutter open direction of the engaging slit 34 (indicated by an arrow).

Accordingly, it is possible to prevent a malfunction which is caused to the clearance of the engaging pin 41 of the shutter drive member installed in the disc apparatus and the disc cartridge 10.

According to the embodiments as described above, it is possible to achieve disc cartridge apparatus which are fully protected from dusts without using particular fastening members like screws or springs in assembling the cartridge main body.

In the above embodiments, the drive operation of the shutter drive member 40, i.e., the engagement of the shutter drive member 40 and the sliding shutter 7 is carried out in the course of that the disc cartridge 10 moves horizontally in the loading process. However the present invention is not limited to such a situation. For example, the drive operation of the shutter drive member 40, i.e., the engagement of the shutter drive member 40 and the sliding shutter 7 can be carried out in the course of that the disc cartridge 10 moves vertically in the loading process.

Further in the above embodiments, the disc 4 is the type of double sided information disc. However the present invention can be adapted to many types of disc cartridge that accommodates a single-sided information disc, without being limited to the above embodiment. In this case, as a matter of course, only one opening is defined in the proper one of the case-halves, e.g., the upper case-half 1. Also in this case, the sliding shutter 7 can include only one shutter blade in confronting the single opening.

Further in the above embodiments, the sliding shutter 7 is constructed to slide toward both sides of the openings. However the present invention is not limited to such construction. That is, the sliding shutter can be constructed to slide toward only one side of the openings. In this case the openings are uncovered by the slide of the sliding shutter in one direction, while it is covered by the slide of the sliding shutter in the other direction. In this case the locking mechanism for the sliding shutter 7 then comprised one of the spring hooks 17, 17 which are formed on the sliding side and its corresponding one of the engaging slit 34. The unlocking operation in this case is carried out by inserting the engaging pin 41 into the engaging slit 34 so as to deform the spring hook 17, as mentioned above. Then the shutter drive member 40 moves so that the engaging pin 41 slides the sliding shutter 7 to the position completely uncovering the opening by being guided along the guiding groove 18. While the covering operation is carried ont by the movement of the shutter drive member 40 in the opposite direction. This situation can be also adapted for such single-sided type information discs and thus to the cartridge with single opening.

The present invention can also be adapted for many applications without departing from the principle of the present invention.

As described above, the present invention can provide the double-sided type disc cartridge apparatus which has a relatively small number of components, a simple construction, an accurate shutter driving operation and no fear of being penetrated by duets in the sliding shutter driving process. And, it never occurs a malfunction that the disc cartridge is unloaded from the recording and reproducing apparatus in the state that the sliding shutter is on the half-way between the positions for covering and uncovering openings. While, on the contrary, it is possible to block the entering of the shutter drive member so as to protect the disc when the sliding shutter in half-opened position is inserted in the recording and reproducing apparatus.

As described above, the present invention can provide an extremely preferable disc cartridge apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A disc cartridge apparatus comprising:
a cartridge main body wherein the disc having an information bearing surface is rotatably accommodated, and which is provided with an opening confronted by a pickup for recording or reproducing information signals to or from the disc;
a sliding shutter installed in the cartridge main body in capable of sliding between a position where it covers the opening of the cartridge main body and another position where it uncovers the opening;
a releasable locking mechanism having a portion to be engaged defined on the sliding shutter and an engaging portion defined on the cartridge main body for locating the sliding shutter to the position for covering the opening;
a shutter drive member for sliding the sliding shutter in the uncovering position by releasing the lock of the locking mechanism as well as sliding the sliding shutter form the uncovering position to the covering position;
a guide member formed in the cartridge main body for guiding the shutter drive member in the operation of sliding the sliding shutter to the covering position in engage with the shutter drive member; and
the locking mechanism and the guide groove are defined to be closed by the sliding shutter in the covering position.

2. A disc cartridge apparatus comprising:
a cartridge main body wherein a disc having an information bearing surface is rotatable accommodated, and which is provided with an opening confronted by a pickup for recording or reproducing information signals to or from the disc;
a sliding shutter installed in the cartridge main body in capable of sliding between a position where it covers the opening of the cartridge main body and another position spaced in one direction and another direction from the covering position, where it uncovers the opening;
a locking mechanism having a first and second portion to be engaged defined of the sliding shutter, a first engaging portion for preventing the slide of the sliding shutter in the first direction in engaged with the first portion to be engaged and a second engaging portion for preventing the slide of the sliding shutter in the second direction in engaged with the second portion to be engaged;
a shutter drive member for driving the sliding shutter in the uncovering position by disengaging the portion to be engaged and the engaging portion of the locking mechanism as well as driving the sliding shutter form the uncovering position to the covering position; and
a guide member having a guide groove formed to be located between the first and the second engaging position in the cartridge main body for guiding the shutter drive member in the operation of sliding the sliding shutter to the covering position in engage with the shutter drive member.

3. A disc cartridge apparatus comprising:
a cartridge main body wherein a disc having an information bearing surface is rotatably accommodated, and which is provided with an opening confronted by a pickup for recording or reproducing information signals to or from the disc;
a sliding shutter installed in the cartridge main body in capable of sliding between a position where it covers the opening of the cartridge main body and another position where it uncovers the opening;
a shutter drive passage groove defined on the cartridge main body;
a shutter drive member which tip is inserted through the shutter drive passage groove for driving the sliding shuttering the uncovering position by releasing the lock of the locking mechanism as well as driving the sliding shutter from the uncovering position to the covering position when the sliding shutter is in the position covering the opening; and
a slip-out preventing member having a hook engaged in capable of sliding with the cartridge main body formed to be located on both sides of the sliding shutter driving passage groove when the sliding shutter covers the opening.

4. A disc cartridge apparatus comprising:
a main body of a cartridge apparatus which accommodates a disc having a signal bearing surface rotatably and is provided with an opening confronted by a pickup for performing the recording or reproduction of information signals to or from the accommodated disc;
a sliding shutter mounted to the main body of the cartridge apparatus in capable of sliding between a position where the opening is to be closed and a position where the opening is to be opened in both of one direction and an opposite direction;
a locking mechanism that includes portions to be engaged provided on the sliding shutter and engaging portions provided on the main body of the cartridge apparatus for locating and locking the sliding shutter at the closed position when it is at a position whore the opening is to be closed;
a shutter opening and closing member which unlocks the locking mechanism when its tip bumps against the engaging portion of the locking mechanism, slides the sliding shutter to the open position and slides it to the close position when it is at the open position;
a shutter opening/closing passage formed on the main body of the cartridge apparatus to guide the sliding shutter opening and closing member to the locking mechanism; and
a guide member formed on the main body of the cartridge apparatus provided with a groove that is extended to the sliding shutter opening/closing passage and at least a part of which wall surface is formed with the engaging portion of the locking mechanism. This guide member guides the sliding shutter opening and closing member that is engaged with the sliding shutter until the sliding shutter is located at the closed position when the sliding shutter opening and closing member slides the sliding shutter for performing an opening and closing action.

5. A disc cartridge apparatus comprising:
a cartridge main body wherein a disc having an information bearing surface is rotatably accommodated, and which is provided with an opening confronted by a pickup for recording or reproducing information signals to or from the disc;
a sliding shutter installed in the cartridge main body in capable of sliding between a position where it covers the opening of the cartridge main body and another position where it uncovers opening;
a locking mechanism having a portion to be engaged defined of the sliding shutter and an engaging portion defined on the cartridge main body for locating the sliding shutter to the position covering the opening;
a shutter drive member which tip bumps against the engaging portion of the locking mechanism for sliding the sliding shutter by releasing the lock of the locking mechanism as well as sliding the sliding shutter from the uncovering position to covering position at the operation of sliding the sliding shutter; and
a sliding shutter drive member blocking means defined on the cartridge main body for locking the slide of the sliding shutter locating at a wrong position when the cartridge main body bumps against the tip of the shutter drive member at the operation of sliding the sliding shutter.

6. A disc cartridge apparats comprising:
a cartridge main body wherein a disc having an information bearing surface is rotatably accommodated, and which is provided with an opening confronted by a pickup for recording or reproducing information signals to or from the disc;
a sliding shutter installed in the cartridge main body in capable of sliding between a position where it covers the opening of the cartridge main body and another position where it ncovers the opening;
a releasable locking mechanism having a portion to be engaged defined on the sliding shutter and an engaging portion defined on the cartridge main body for locating the sliding shutter to the position for covering the opening;
a shutter drive member which tip bumps against the engaging portion of the locking mechanism for sliding the sliding shutter by releasing the lock of the locking mechanism as well as sliding the sliding shutter from the uncovering position to the covering position at the operation of sliding the sliding shutter; and
a sliding shutter drive blocking means for preventing the slide of the sliding shutter and the return means for returning the sliding shutter to the regular position defined on the sliding shutter when the tip of the shutter drive member bumps against the sliding shutter locating at a wrong position in the operation of sliding the sliding shutter.

7. A disc cartridge apparats as climed in any one of claims 1, 3, 4, 5 and 6, wherein the locking mechanism includes:
first and second portions to be engaged defined on the sliding shutter;
a first engaging portion defined on the cartridge main body for preventing the slide of the sliding shutter in one direction by engaged with the first portion to be engaged; and
a second engaging portion defined on the cartridge main body for preventing the slide of the sliding shutter in another direction by engaged with the second portion to be engaged.

8. The disc cartridge apparatus as claimed in any one of claims 3, 4, 5 and 6, wherein:
the tip of the shutter drive member includes a pin with steps; and
the portion to be engaged of the sliding shutter correspond to it includes a slit with steps.

9. The disc cartridge apparatus as claimed in any one of claims 3, 4 5 and 6, wherein:
the tip of the shutter drive member includes a pin with steps; and
the web-like rib engaging with the pin with steps is defined on the engaging portion of the locking mechanism.

10. The disc cartridge apparatus as claimed in any one of claims 3, 4, 5 and 6, wherein:
the tip of the shutter drive member includes a pin with steps; and
the portion to be engaged of the sliding shutter correspond to it includes a slit, and entering portion of the pin of the shutter drive member in entering the slit of the sliding shutter decenters in opposite direction, to the sliding shutter open direction.

11. A disc cartridge apparatus comprising:
a cartridge main body constructed by fitting upper and lower case-halves with each other wherein a disc having an information bearing surface is rotatably accommodated, and which is provided with an opening confronted by an optical pickup for recording or reproducing information signals to or from the disc;
a sliding shutter installed in the cartridge main body in capable of sliding between a position whore it covers the opening of the cartridge main body and another position where it uncovers the opening; and
a groove which defined on the cartridge main body side formed on the one of the case-half of the cartridge main body and, a plane surface containing the one side of the groove is a half fitting surface.

12. A disc cartridge apparatus comprising:
a main body of a cartridge apparatus which accommodates a disc having a signal bearing surface rotatably and is provided with an opening confronted by a pickup for performing the recording or reproduction of information signals to or from the accommodated disc;
a sliding shutter mounted to the main body of the cartridge apparatus in capable of sliding between a position where the opening is to be closed and a position where the opening is to be opened in both of one direction and an opposite direction;
a locking mechanism which includes a first and a second portions to be engaged provided on the sliding shutter, a first engaging portion that is elastic and prevents the sliding shutter from sliding in one direction when the sliding shutter is located at the position where the opening is closed as engaged with the firs portion to be engaged provided on the main body of the cartridge apparatus, and a second engaging portion that is elastic and prevents the sliding shutter from sliding in the other direction as engaged with the second portion to be engaged. This locking mechanism has been so formed that the first and the second engaging portions have engaging end surfaces to engage with the sliding shutter in the state where they are kept engaged with the engaging holes, respectively and the engaging end surfaces face in the opposite directions each other.

13. A disc cartridge apparatus comprising:
a main body of a cartridge apparatus which accommodates a disc having a signal bearing surface rotatably and is provided with an opening confronted by a pickup for performing the recording or reproduction of information signals to or from the accommodated disc;
a sliding shutter mounted to the main body of the cartridge apparatus, which has a surface opposite to the end surface of the main body of the cartridge apparatus and a surface extending from this surface and opposing to the plane of the main body of the cartridge apparatus, and is slidable between a position where the opening of the main body of the cartridge apparatus is to be closed and a position where the opening is to be opened;
a releasable locking mechanism which locates and locks the sliding shutter at the close position when it is at a position where the opening is to be closed; and
a pair of engaging slits provided to the sliding shutter to allow the sliding shutter opening and closing member enter to unlock the locking mechanism in the state where the sliding shutter is at the closed position and provided at the symmetrical positions against a point which becomes a substantial center of the directions of width and thickness of the end surface of the main body of the cartridge apparatus when the sliding shutter is at the closed position.

14. A disc cartridge apparatus comprising:
a main body of a cartridge apparatus which accommodates a disc having a signal bearing surface rotatably and is provided with an opening confronted by a pickup for both sides of the accommodated disc for performing the recording or reproduction of information signals to or from the accommodated disc;
a sliding shutter which has an extension piece opposing to the end surface of the main body of the cartridge apparatus and a pair of shutter blades provided opposing to both side ends of this extension piece and is mounted to the main body of the cartridge apparatus in capable of sliding between a position where each of the opening of the main body of the cartridge apparatus is to be closed and a position where the opening is to be opened;
a releasable locking mechanism for locating the sliding shutter at a close position when the opening is at the close position; and
a pair of engaging slits provided to the sliding shutter to allow the sliding shutter opening and closing member enter to unlock the locking mechanism in the state where the sliding shutter is at the closed position and provided at the symmetrical positions against a point which becomes a substantial center of the directions of width and thickness of the end surface of the main body of the cartridge apparatus when the sliding shutter is at the closed position.

15. A disc cartridge apparatus as claimed in any one of claims 13 and 14, wherein:
the sliding shutter is mounted to the main body of the cartridge apparatus in capable of sliding between a position where the opening of the main body of the cartridge apparatus is to be closed and a position where the opening is to be opened in both of one direction and its opposite direction; and
the locking mechanism includes a first and a second portions to be engaged provided on the sliding shutter, a first engaging portion which prevents the sliding shutter from sliding in one direction when the sliding shutter is located at the position where the opening is closed as engaged with the first portion to be engaged provided on the main body of the cartridge apparatus, and a second engaging portion which prevents the sliding shutter from sliding in the other direction as engaged with the second portion to be engaged.

16. A disc cartridge apparatus comprising:
a main body of a cartridge apparatus which accommodates a disc having a signal bearing surface and a clamp portion provided at its center rotatably and is provided with an opening confronted by a pickup for performing the recording or reproduction of information signals to or from the accommodated disc;
a sliding shutter mounted to the main body of the cartridge apparatus in capable of sliding between positions where the opening of the main body of the cartridge apparatus is to be closed and to be opened and is so formed that at least a part of the edge of the sliding shutter conceals a part of the opening when the sliding shutter is at the position where the opening is to be opened; and
a releasable locking mechanism comprising portions to be engaged provided to the sliding shutter and engaging portions provided to the main body of the cartridge apparatus for locating the sliding shutter at the close position when the sliding shutter is at a position where the opening is to be closed.

17. A disc cartridge apparatus comprising:
a main body of a cartridge apparatus which accommodates a disc having a signal bearing surface and a clamp portion provided at its center rotatably and is provided with an opening confronted by a pickup for performing the recording or reproduction of information signals to or from the accommodated disc and an opening confronted by a driving gear for driving a disc;
a sliding shutter mounted to the main body of the cartridge apparatus in capable of sliding between positions where the opening of the main body of the cartridge apparatus is to be closed and to be opened and is so formed that at least a part of the edge of the sliding shutter corresponding to the opening for driving a disc is cut in the same shape as a part of the disc driving opening and at least the disc driving opening is almost fully opened when the sliding shutter is at a position where the opening is to be opened; and
a releasable locking mechanism comprising portions to be engaged provided to the sliding shutter and engaging portions provided to the main body of the cartridge apparatus for locating the sliding shutter at the closed position when the sliding shutter is at a position where the opening is closed.

18. A disc cartridge apparatus as claimed in claim 17 wherein: the sliding shutter is mounted to the main body of the cartridge apparatus in capable of sliding between a position where the opening of the main body of the cartridge apparatus is to be closed and a position where the opening is to be opened in both one direction and an opposite direction and a part of each edge of the openings corresponding to the driving opening of the sliding shutter is cut in the same shape as a part of the driving opening so that the driving opening is almost fully opened when the sliding shutter is at the positions where the openings are to be opened.

19. A disc cartridge apparatus as claimed in claim 1 wherein: the main body of the cartridge apparatus includes a first half and a second half which are arranged facing each other and these first and second halves are assembled by engaging an engaging hook formed on one of the halves with the engaging slit formed on the other half.

20. A disc cartridge apparatus as claimed in any one of claims 2, 7, 12 and 15, wherein an engaging stopper which bumps against a part of the main body of the cartridge apparatus in order to define the displacement is formed on the tip of the first and the second engaging portions, respectively.

21. A disc cartridge apparatus comprising:
a main body of a cartridge apparatus comprising a first and a second halves arranged facing each other, which accommodates a disc having a signal bearing surface rotatably and is provided with an opening confronted by a pickup for performing the recording or reproduction of information signals to or from the accommodated disc;
a sliding shutter mounted to the main body of the cartridge apparatus in capable of sliding between a position where the opening of the main body of the cartridge apparatus is to be closed and a position where the opening is to be opened;
a bank provided to the first half of the main body of the cartridge apparatus to connect the end of the opening and a first bridge provided to the first half with a specific space to the bank to connect the opening to the first half;
a second bridge provided to the second half of the main body of the cartridge apparatus so that it is laid over the first bridge in the direction of width and an elastic engaging portion provided to the second half of the main body of the cartridge apparatus so that the tip is positioned between the bank of the first half; and
a releasable locking mechanism which includes a portion to be engaged provided to the sliding shutter and the engaging portion of the main body of the cartridge apparatus and locates the sliding shutter at the close position when the sliding shutter is at the closed position of the opening.
